# EUROPEAN PATENT APPLICATION

(11) **EP 1 164 780 A2**
(43) Date of publication of application: **19.12.2001**
(21) Application number: 01000139.4
(22) Date of filing: 04.05.2001
(51) Int. Cl.: H04N 1/191

(54) **System and method for exposing a recording medium in an imaging system**

(30) Priority: 16.05.2000 US 571915
(71) Applicant: Agfa Corporation, Ridgefield Park, NJ 06660-2199 (US)
(72) Inventor: Kelley, Henry A., Woburn, MA 01801 (US)
(74) Representative: Van Ostaeyen, Marc Albert Jozef

(57) **Abstract**

An image recording system is disclosed for imaging a recording medium in an imaging system. The image recording system includes a plurality of lasers, a plurality of fiber optic elements (24), and a controller. Each of the plurality of lasers includes an output port (14), and each of the plurality of fiber optic elements (24) has a first end that is coupled to a laser output port, and a second end. The second ends of at least some of the plurality of fiber optic elements (24) are arranged in a continuous array. The controller is for imaging selected fiber optic elements along the array at an interlace factor of K onto a recording medium. The array utilises a total of N fiber optic elements for imaging where the number N has no common prime factors with K. Recording at alternate addressabilities may be obtained in some embodiments by changing the interlace factor K.

## Description

### FIELD OF THE INVENTION

The invention relates generally to imaging systems, and particularly relates to systems for exposing a recording medium in an imaging system.

### BACKGROUND OF THE INVENTION

Conventional imaging systems typically include an illumination system for generating a field of illumination, and an optical assembly for applying the field of illumination in a modulated form to an imaging surface. Such illumination systems may provide a line of laser illumination so that a line of picture elements (or pixels) may be imaged at a time for speed in imaging. The field of illumination may be modulated by selectively controlling the illumination system, or by using a light modulator for selectively modulating the field of illumination.

Imaging systems that modulate the light field by controlling the illumination system typically switch on and off individual lasers in an array as the recording medium is being scanned. The illumination from each laser may print a picture element (or pixel) of the image, and the lasers are switched on and off to cause a desired image to be recorded on the medium. Such systems may be suitable for applications requiring relatively high power laser illumination, e.g., for thermal printing, and may include a relatively large number of individual lasers for speed of writing. However, such higher power illumination systems generally require the banks of lasers to be rather large. It is often required that such higher power lasers be located some physical distance away from the imaging apparatus, and coupled to the imaging apparatus via fiber optic cables.
In fiber optic coupled illumination systems, however, the illumination emitted from the fiber optics cables does not form a continuous line even if the optical cables abut one another. This is because the cladding on the fiber optic cables has a diameter that is typically about twice the diameter of the core (which carries the illumination). Moreover, in many applications, the cladding may not be permitted to contact the cladding of adjacent cables. Further, the spot size of illumination is also typically smaller than the full diameter of the core itself. The closest spacing that is possible in some applications, therefore, is a spacing between spot sizes that is on the order of three or four times the diameter of the spot size itself.
One approach to bringing the illumination spots closer together is to tilt the array along a direction orthogonal to its longitudinal axis with respect to the direction of illumination as the illumination travels toward the imaging medium. By tilting the array, illumination spots may appear at the recording medium to be closer together. Unfortunately, however, relatively high angles of such tilt are often necessary, making alignment and adjustment of the array components difficult and critical. For example, the timing of the individual lasers must be adjusted to account for the varied imaging distances on the recording medium. Also, thermal interactions may occur among adjacent laser beams and/or relatively simultaneously illuminated spots if the beams are very close together. Such thermal interactions may cause energy transfer between beams and/or illumination spots, causing image artefacts that are generally referred to as banding.

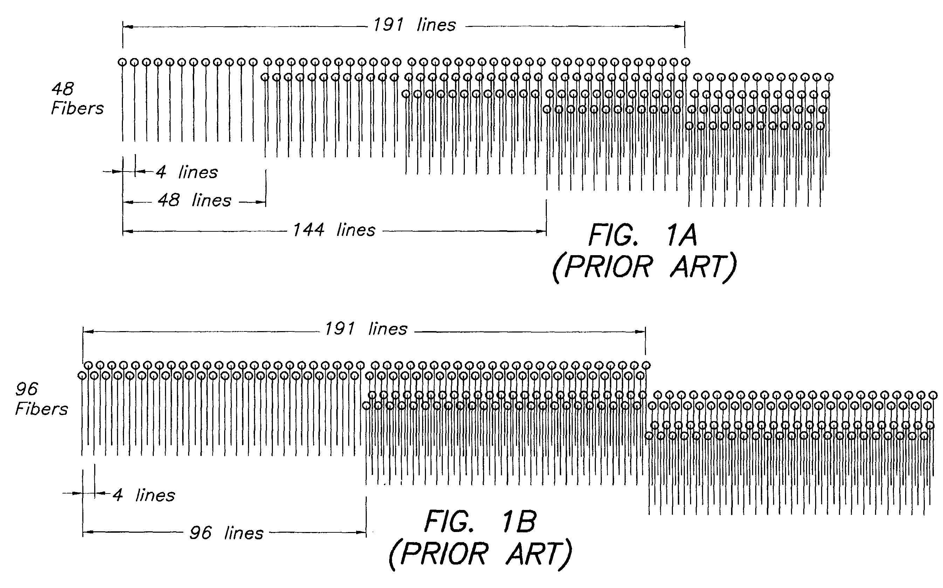

Another approach to address this problem is to alternate the printing of adjacent pixels, (e.g., to print every second, third or fourth pixel), and to make several passes over the same recording area until all pixels are eventually imaged. Laser arrays in imaging systems desirably include a total number of lasers that is a multiple of eight, e.g., 48 or 96 lasers. In such systems, however, additional spaces are required between certain multiples of fibers to prevent the second, third and fourth passes of the array from over-writing sections of the previous passes. For example, as shown in Figure 1A, a conventional technique for alternate pixel imaging (or interlacing) in a system including 48 lasers includes added artificial spaces between the 12th, 24th, and 36th lasers. Figure 1B shows a similar conventional technique for interlacing in a system including 96 lasers. The spacing is required to prevent subsequent passes from overlapping, and requires that the laser array and/or the optics be specifically designed to provide the spacing. This non-regular spacing is relatively difficult to obtain, and inhibits the use of the array with other interlace factors and in other applications not involving interlacing.

### OBJECTS OF THE INVENTION

There is a need, therefore, for an imaging system that includes an array of lasers that are fiber optically coupled to an imaging head, and that overcomes the above shortcomings.

### SUMMARY OF THE INVENTION

The above mentioned objects are realised by a system and methods having the specific features set out in claims 1, 6 and 8. Specific features for preferred embodiments of the invention are set out in the dependent claims.
The invention provides for an image recording system for illuminating a recording medium in an imaging system. The image recording system includes a plurality of lasers, a plurality of fiber optic elements, and a controller. Each of the plurality of lasers is coupled to a laser output port, e.g., the output of a pigtail laser. Each of the plurality of fiber optic elements has a first end that is coupled to a laser output port, and a second end. The second ends of at least some of the plurality of fiber optic elements are arranged in a continuous array. These second ends are preferably arranged equidistantly with respect to each other. The controller is for illuminating selected fiber optic elements along the array at an interlace factor of K onto a recording medium. The array utilises a total of N fiber optic elements for illumination where the number N has no common prime factors with K. In an embodiment of the invention the number N is odd, and in a further embodiment, the number N is a prime number.
In a further embodiment, the number N is one more or one less than the product of two integer numbers, where at least one of the numbers is preferably a power of two.
In a further embodiment, the interlacing factor is adjusted to change the addressability of the image being recorded.

### BRIEF DESCRIPTION OF THE DRAWINGS

The following description may be further understood with reference to the accompanying drawings in which:
**Figures 1A and 1B** show illustrations of diagrammatic views of recording methods of the prior art;
**Figure 2** shows an illustration of an imaging system in which an image recording system of the invention may be utilised;
**Figure 3** shows an illustration of a recording medium being imaged by an image recording system of the invention;
**Figure 4** shows an illustration of a diagrammatic view of a generalised recording method of the invention;
**Figure 5** shows an illustration of a diagrammatic view of a particular recording method of the invention;
**Figure 6** shows an illustration of a diagrammatic view of another recording method of the invention;
**Figures 7 and 8** show illustrations of diagrammatic views of further recording methods of the invention; and
**Figures 9 and 10** shows illustrations of diagrammatic views of further recording methods of the invention.
The drawings are shown for illustrative purposes only, and are not to scale.

### DETAILED DESCRIPTION OF THE INVENTION

It has been discovered that when a large number of illumination beams are employed in forming the line of illumination, one illumination beam may remain unused (or one may be added) without significantly affecting the efficiency of the imaging system. It has further been discovered that when the resulting number of illumination beams has no common prime factor with the interlacing factor (and preferably is a prime number), then the spacing of the illumination beams need not be irregular.

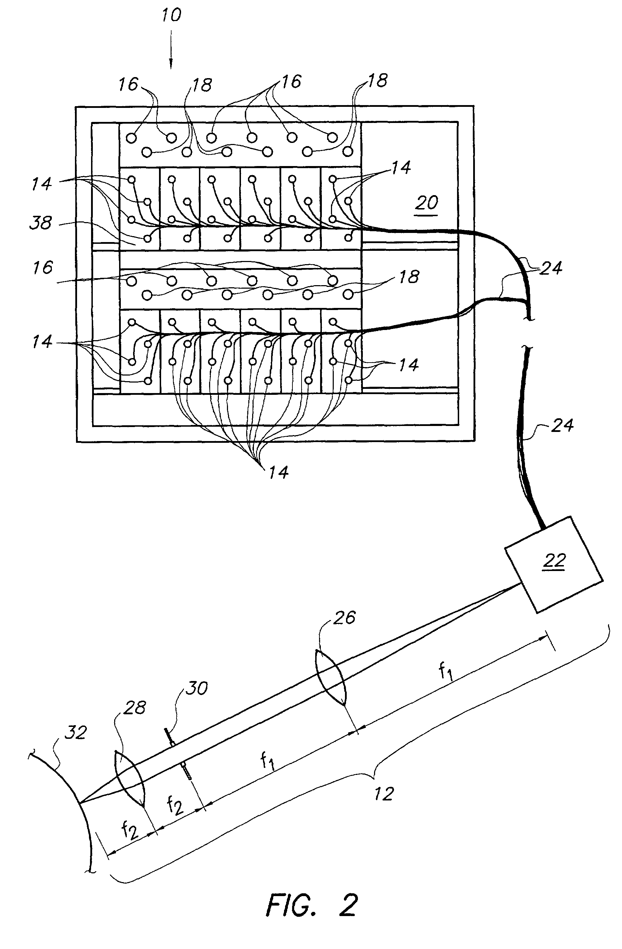

As shown in Figure 2, an imaging system including a recording system and method of the invention includes a bank of lasers that are housed in a cabinet 10, and imaging optics 12. Each laser includes a laser output port 14, and the cabinet 10 also houses water coolant manifolds having input and output ports 16 and 18 respectively, as well as a computer processor 20 that is responsible for timing and pixel formatting. The laser output ports 14 are coupled to an imaging head 22 of the imaging optics 12 via fiber optic cables 24. The lasers are preferably grouped in packaging units 38 of four or eight lasers to a unit. For example, a cabinet may include six units of eight lasers for producing 48 illumination beams, or may include twelve units of eight lasers for producing 96 illumination beams. Each unit 38 may also include short optic couplers (pigtails) to internally couple each laser to an output port 14. Each unit 38 may also include block coolant input and output ports for coupling to the manifold input and output ports 16 and 18, as well as an electronic controller board specific to the unit itself. With this design, each unit 38 may be replaced independent of the other units in the system.

The imaging system 12 is shown in Figure 2 in a dual telecentric arrangement. The imaging system is comprised of a first lens group 26 and second lens group 28. Lens group 26 has an effective focal length equal to f1 and lens group 28 has an effective focal length equal to f2. Dual telecentricity is achieved when the perpendicular distance between the principal planes of lens groups 26 and 28 is equal to f1 + f2, and the aperture associated with lens group 28 is positioned at a common focal plane, i.e., where the aperture 30 is a distance f1 from the first lens group 26 and a distance f2 from the second lens group 28. With a dual telecentric arrangement, magnification of the system is insensitive to movements of the imaging head 22 or imaging medium 32, or to underfilling of the aperture.

Another advantage of this optical system is that either magnification or focus can be adjusted independent of one another. If lens group 26 is positioned a distance f1 from the imaging head, lens group 28 positioned a distance f2 from the image plane 32, and the distance between first and second lens groups is the distance f1 + f2, then the ratio (f2 / f1) sets the magnification of the imaging system. The magnification is adjusted by moving one or more elements of the first lens group 26. The focus of the system is adjusted by moving one or more elements of the second lens group 28.

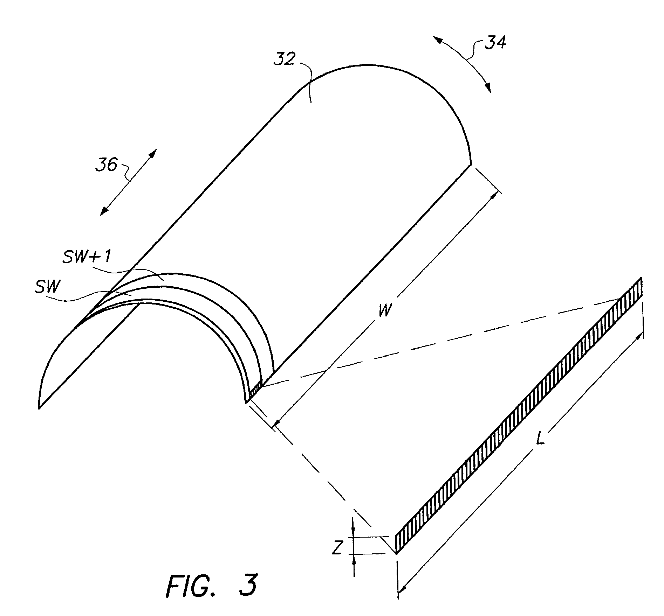

The illumination of the plurality of lasers is focused by the imaging optics on the recording medium 32, which is supported by an external drum. As further shown in Figure 3, a line of laser illumination is used to record pixels along successive swaths (SW) of the recording medium. The line of illumination (also called a line of radiation), is coincident with the medium 32 at the image plane, and has a length (L) and a width (Z). In the present embodiment, only 47 of the 48 lasers are used.

Generally, each line of illumination contains a predetermined number of sections that respectively correspond to the number of illumination beams (N) from the lasers via the fiber optic cables 24. The line of illumination is imaged at an initial position along a first swath (SW) on the recording medium 32. As the drum rotates in the fast axis direction 34, pixels along the line of illumination are selectively illuminated according to image information supplied by control electronics as is well known in the art. Modulation of pixels is synchronised to the rotational speed of the drum. The illumination line is then moved a distance along the width (W), or is continuously moved such that width (W) is traversed in one rotation, that is less than the length (L) of the line of illumination to permit interlacing to occur. The movement of the line of illumination from swath SW to swath SW + 1 is facilitated by movement of the imaging head along the longitudinal axis (i.e., the slow axis) 36 of the rotating drum. The above-described imaging procedure is then repeated for swath SW + 1 and all additional swaths until the image is completely transferred onto the medium 32.

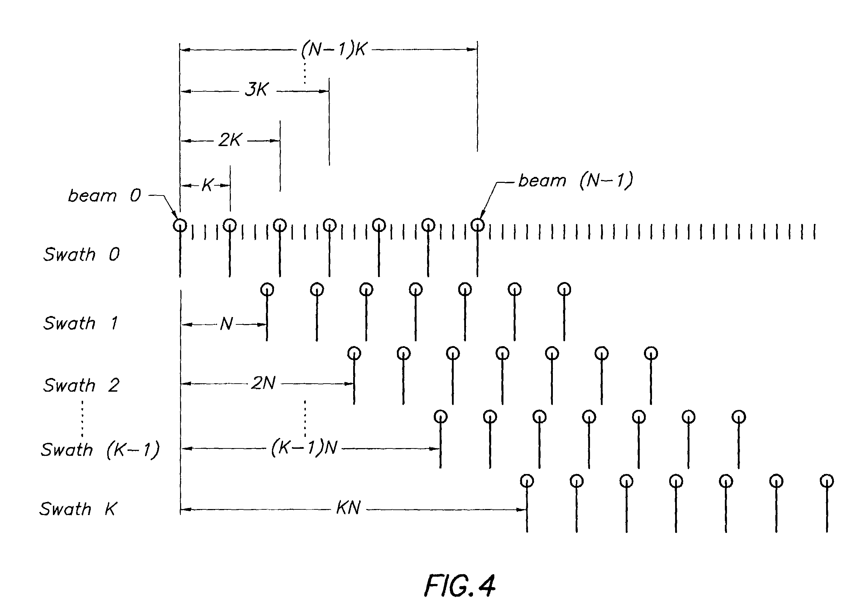

Interlacing is provided to occur in accordance with an interlace factor (K), and as may be seen from Figure 4, only the first swaths up to swath (K-1) need to be considered for an interlace factor of K since the first beam of swath (K) must be beyond the last beam of swath 0. This is because the product K x N is greater that (K-1) x N. Also, once the interlace works for swaths up to and including swath (K-1), the interlace will work for all swaths.

As further shown in Figure 4, if any multiple of the swath - to - swath spacing (which is N for N beams), up to a multiple of (K-1), is equal to any multiple of the spacing between beams (K), up to a multiple of (N-1) for the last beam in swath 0, then overwriting will occur. To avoid this, the rational fraction N/K must not equal the ratio between any integer in the range of 1 to N-1 and any integer in the range of 1 to K-1. Interlacing an evenly spaced array is then possible if the fraction N/K is not reducible to a fraction of two smaller integer numbers. In other words, the prime number factorisations of N and K may not contain prime factors in common. If K=1 or N=1, there is, of course, no interlacing.

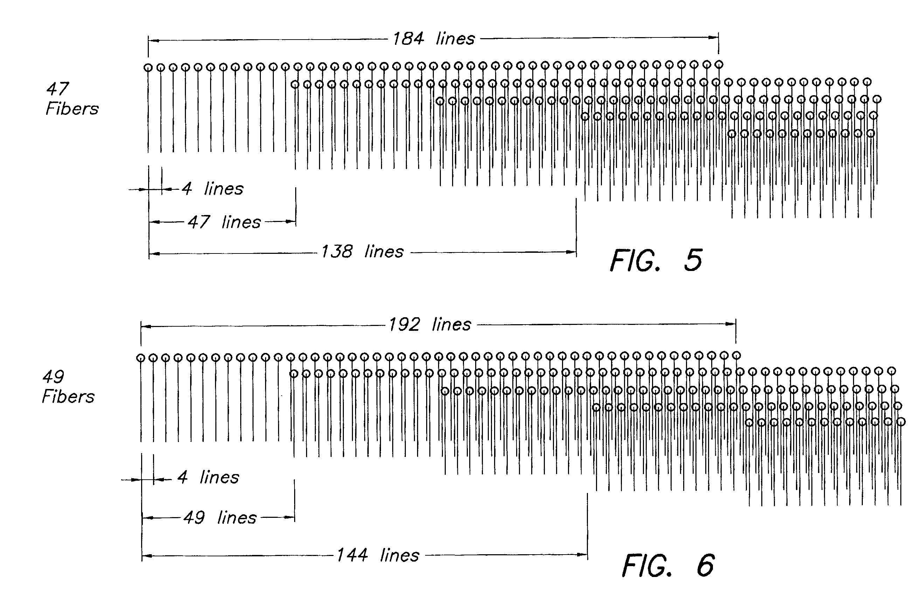

As shown in Figure 5, an embodiment of the invention using 47 illumination beams and an interlacing factor of 4, permits a continuous (non-irregularly) spaced array of illumination beams to be used. The choice of 47 illumination beams (of fibers) is relatively easy to implement, and imposes no great hardship on system speed or cost. This is because only one illumination source from a 48 beam source needs to be turned off. Moreover, since 47 is a prime number, the system will work for all interlacing factors (other than 47 or multiples of 47). As shown in Figure 6, another embodiment of the invention provides that 49 illumination beams may be employed with an interlacing factor of 4.

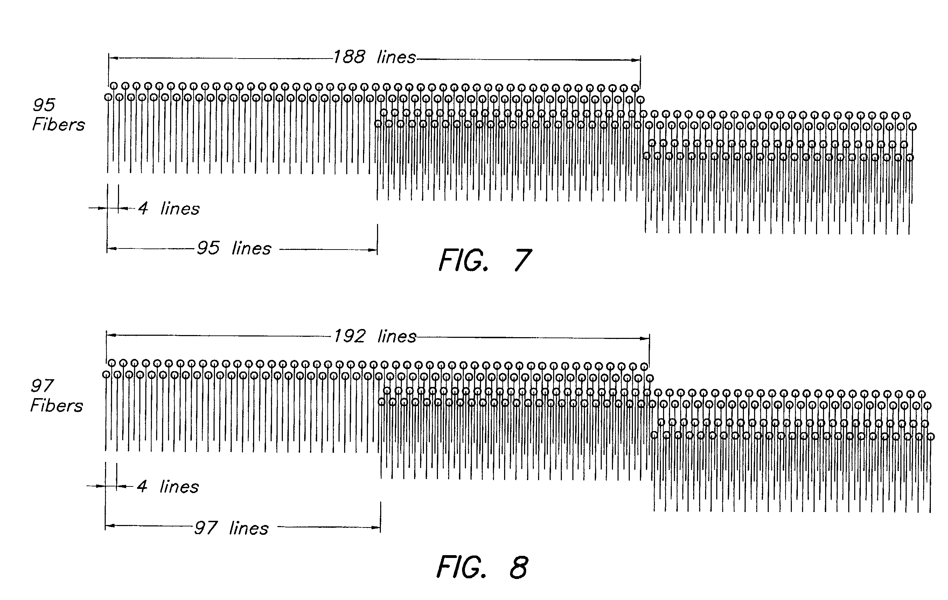

As shown in Figure 7, in a further embodiment of the invention, 95 illumination beams may be used with an interlacing factor of 2 when the illumination source provided two lines of illumination, one above (and offset from) the other. These illumination lines are shown as double rows of fibers, statically interlaced by offsetting the top row from the bottom row as shown. Figure 8 shows a similar system in which 97 illumination beams may be used in a double row arrangement with an interlacing factor of 2.

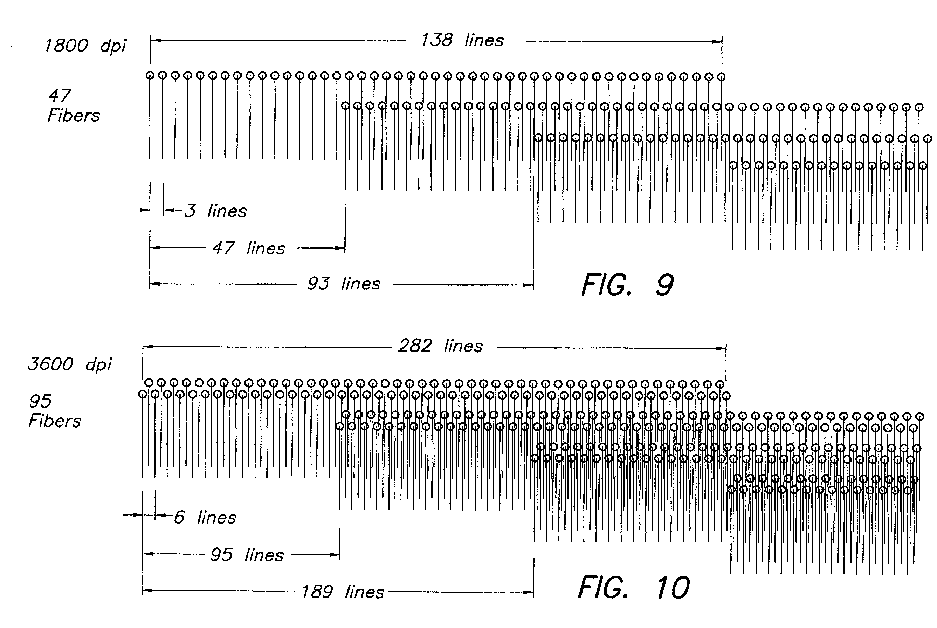

As shown in Figure 9, an array of 47 illumination beams may be used with an interlace factor of 3. This permits the same array to be used at a lower resolution (or addressability), e.g. 1800 dots per inch (dpi), i.e. 71 dots per mm, than with the system shown in Figure 5 having an interlace factor of 4 and a resolution of 2400 dpi, i.e. 95 dots per mm. The array of 47 beams may also be used to form systems of higher resolution as well. As shown in Figure 10, an array of 95 illumination beams arranged in double rows may be used with an interlace factor of 3 to obtain a higher addressability (e.g., 3600 dpi, i.e. 142 dots per mm).

The optical imaging head disclosed above is preferably used with an external drum imagesetter or platesetter (i.e. platemaker), so that the image is transferred onto a medium supported by the external surface of the drum. The optical imaging head could also be used in direct-to-press imaging to project the line of illumination directly onto a plate cylinder of a printing press. In this case, the head would be replicated at each station of the printing press. Furthermore, while the head is preferably used in the above-described applications, it may also be used in an internal drum or capstan style imagesetter or platesetter.

Those skilled in the art will appreciate that numerous modifications and variations may be made to the above disclosed embodiments in keeping with the claims of the present invention.

## Claims

1. An image recording system for imaging a recording medium (32) in an imaging system, said image recording system comprising:
- a plurality of lasers, each of which is coupled to a laser output port (14);
- a plurality of fiber optic elements (24), each of which has a first end that is coupled to a laser output port (14), and a second end, the second ends of at least some of the plurality of fiber optic elements (24) being arranged in a continuous array; and
- a controller for imaging selected fiber optic elements along said continuous array at an interlace factor of K onto said recording medium (32), said controller and said continuous array utilising a total of N fiber optic elements (24) for imaging
is **characterised in that** the number N has no common prime factors with the number K.

2. The image recording system according to claim 1, wherein said number N is an odd number or a prime number.

3. The image recording system according to claim 1 or 2, wherein said second ends are arranged to form two continuous arrays, and wherein one of said two continuous arrays is positioned to be above and offset from another of said two continuous arrays.

4. The image recording system according to any one of the preceding claims, wherein said number N is a product of two integer numbers i and j.

5. The image recording system according to any one of the preceding claims, wherein said controller has means to provide an alternate resolution by adjusting the interlace factor K.

6. The image recording system according to any one of the preceding claims, wherein said controller has means for moving either the recording medium (32) or said continuous array in a direction along the length of the continuous array such that an adjacent interlaced swath (SW) of the recording medium (32) is imaged.

7. Use of the image recording system according to any one of the preceding claims in a platemaker, an imagesetter or a direct to press system.

8. A method of recording an image on a recording medium (32) in an imaging system, said method comprising the steps of:
- imaging selected fiber optic elements (24), the ends of at least some of which are arranged in a continuous array, wherein said selected fiber optic elements (24) are selected at an interlace factor of K;
- intermittently or continuously shifting either the recording medium (32) or the continuous array in a direction along the length of the continuous array;
- selecting the fiber optic elements (24) for imaging such that the total number of fiber optic elements that are selected for imaging is N where the number N has no common prime factors with K.

9. The method according to claim 8, wherein the number N is an odd number or a prime number.

10. The method according to claim 8 or 9, wherein the ends of the N fiber optic elements (24) are arranged to form two continuous arrays.
